# FASCICULE DE BREVET EUROPEEN

(11) **EP 2 342 120 B1**
(45) Date de publication et mention de la délivrance du brevet: **01.08.2012**
(21) Numéro de dépôt: 09760186.8
(22) Date de dépôt: 21.10.2009
(51) Int. Cl.: B62D 25/14

(54) **ENSEMBLE DE TRAVERSE DE PLANCHE DE BORD POUR VÉHICULE AUTOMOBILE, DISPOSITIF POUR PLANCHE DE BORD, VÉHICULE ET PROCÉDÉ DE FABRICATION CORRESPONDANTS**
QUERSTREBENANORDNUNG EINES ARMATURENBRETTS FÜR EIN AUTO UND ENTSPRECHENDES ARMATURENBRETT, FAHRZEUG UND HERSTELLUNGSVERFAHREN
DASHBOARD CROSSBAR ASSEMBLY FOR AN AUTOMOBILE, AND CORRESPONDING DASHBOARD DEVICE, VEHICLE, AND MANUFACTURING METHOD

(30) Priorité: 28.10.2008 FR 0857324
(43) Date de publication de la demande: 13.07.2011
(73) Titulaire: Faurecia Interieur Industrie, 92000 Nanterre (FR)
(72) Inventeur: BAUDART, Laurent, F-60530 Fresnoy En Thelle (FR); DA COSTA PITO, Sergio, F-95800 Cergy (FR)
(74) Mandataire: Blot, Philippe Robert Emile
(86) Numéro de dépôt international: PCT/FR2009/052012
(87) Numéro de publication internationale: WO 2010/049626

(56) Documents cités:
- EP-A- 1 203 711
- WO-A-03/031746
- WO-A-2005/028239
- WO-A-2008/049985
- WO-A-2008/110733
- US-A1- 2005 134 090

## Description

La présente invention concerne un ensemble de traverse de planche de bord pour véhicule automobile, du type comprenant :
- deux traverses s'étendant sensiblement parallèlement l'une à l'autre ; et
- deux organes de fixation sur la caisse du véhicule, chaque organe de fixation étant fixé à une extrémité de chaque traverse de manière à relier les deux traverses entre elles.

Le US 2005 134 090 A décrit un ensemble de ce type, dans lequel l'assemblage des différentes pièces est réalisé par soudage avec apport de matière.

De plus, des éléments de renfort sont prévus de manière à compenser la perte de rigidité de l'ensemble due à la discontinuité des pièces.

Le WO 2008 110 733 A décrit en outre un ensemble de traverse de planche de bord avec deux traverses et deux organes de fixation selon le préambule de la revendication 1.

L'invention a pour but de proposer un ensemble ayant un poids réduit et qui soit simple et peu coûteux à fabriquer.

A cet effet, l'invention a pour objet un ensemble de traverse de planche de bord pour véhicule automobile du type précité, caractérisé en ce que les deux organes de fixation sont venus de matière avec les deux traverses.

L'ensemble selon l'invention peut comporter une ou plusieurs des caractéristiques suivantes :
- chaque organe de fixation est relié à chaque traverse par une portion de liaison qui est venue de matière avec l'organe de fixation et la traverse correspondants, la portion de liaison étant plastiquement déformée de manière à former une portion de liaison coudée ;
- l'un parmi les deux traverses et les deux organes de fixation comporte deux tronçons fixés l'un à l'autre par soudage ;
- chaque organe de fixation comporte au moins une partie écrasée et un orifice de passage ménagé dans la partie écrasée, l'orifice de passage étant destiné à recevoir un élément de fixation solidaire de la caisse du véhicule ;
- les organes de fixation sont des organes de fixation longitudinale et/ou transversale sur la caisse du véhicule ;
- l'ensemble est formé par un tube unique comportant au moins quatre cintrages ;
- le tube comporte au moins un cintrage supplémentaire d'adaptation à la géométrie de l'environnement ;
- le tube présente une épaisseur de paroi variable ; et
- le tube présente une section variable.

L'invention a également pour objet un dispositif pour planche de bord de véhicule automobile, caractérisé en ce qu'il comprend un ensemble de traverse de planche de bord tel que décrit précédemment et au moins deux pièces de fixation sur la caisse du véhicule rapportées sur les traverses.

L'invention a en outre pour objet un véhicule automobile, caractérisé en ce qu'il comprend un dispositif pour planche de bord tel que défini ci-dessus, l'ensemble de traverse de planche de bord étant fixé par les pièces et organes de fixation sur la caisse du véhicule.

L'invention a également pour objet un procédé de fabrication d'un ensemble de traverse de planche de bord tel que décrit précédemment, caractérisé en ce qu'il comprend les étapes suivantes :
- cintrage d'un tube à la jonction entre les traverses et les organes de fixation de façon à former des portions de liaison ; et
- fixation des extrémités du tube entre elles par soudage.

Le procédé selon l'invention peut comporter la caractéristique selon laquelle le procédé comprend une étape d'écrasement du tube de manière à former des parties écrasées, et une étape de réalisation d'un orifice de passage dans les parties écrasées, l'orifice de passage étant destiné à recevoir un élément de fixation solidaire de la caisse du véhicule.

L'invention sera mieux comprise à la lecture de la description qui va suivre, donnée uniquement à titre d'exemple et faite en se référant aux dessins annexés, sur lesquels :
- la Figure 1 est une vue en perspective de l'arrière d'un dispositif pour planche de bord de véhicule automobile équipé d'un ensemble de traverse de planche de bord selon l'invention ;
- la Figure 2 est une vue en perspective de l'ensemble de traverse de planche de bord de la Figure 1 ; et
- la Figure 3 est une vue de côté avec arrachements partiels de l'ensemble de traverse de planche de bord de la Figure 1.

Afin de simplifier la description qui va suivre, les Figures ont été orientées suivant le système d'axes X, Y, Z définissant l'orientation usuelle d'un véhicule automobile, et dans lequel :
- l'axe X est l'axe longitudinal du véhicule, orienté d'arrière en avant ;
- l'axe Y est l'axe transversal orienté de droite à gauche ; et
- l'axe Z est l'axe vertical orienté du bas vers le haut.

Les termes de position et d'orientation qui sont utilisés par la suite s'entendent par rapport à ce système d'axes.

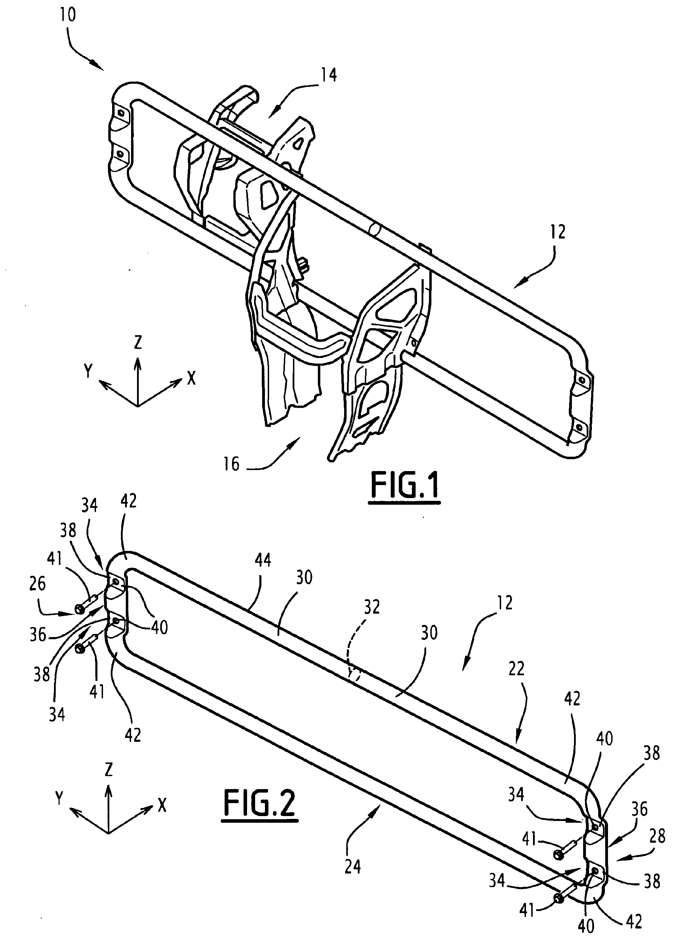

La Figure 1 représente, de façon schématique, un dispositif 10 pour planche de bord de véhicule automobile comprenant un ensemble 12 de traverse de planche de bord et deux pièces 14, 16 de liaison à la caisse du véhicule fixées sur l'ensemble 12.

Comme on le voit mieux sur la Figure 2, l'ensemble 12, de forme générale rectangulaire, comprend une traverse supérieure 22, une traverse inférieure 24, un organe gauche 26 et un organe droit 28 de fixation en X sur la caisse du véhicule.

Les traverses supérieure 22 et inférieure 24 s'étendent sensiblement parallèlement l'une à l'autre et sont disposées sensiblement transversalement l'une en dessous de l'autre dans le véhicule.

Les deux traverses 22, 24 sont identiques, tubulaires et présentent une section constante sensiblement circulaire et une épaisseur de paroi sensiblement constante.

La traverse supérieure 22 comporte deux tronçons 30 placés dans le prolongement l'un de l'autre et fixés bord à bord par soudage, la soudure 32 étant représentée en pointillés sur la Figure 2.

Les organes de fixation gauche 26 et droit 28 s'étendent sensiblement parallèlement l'un à l'autre et sont disposés sensiblement verticalement dans le véhicule, sensiblement perpendiculairement aux traverses 22, 24.

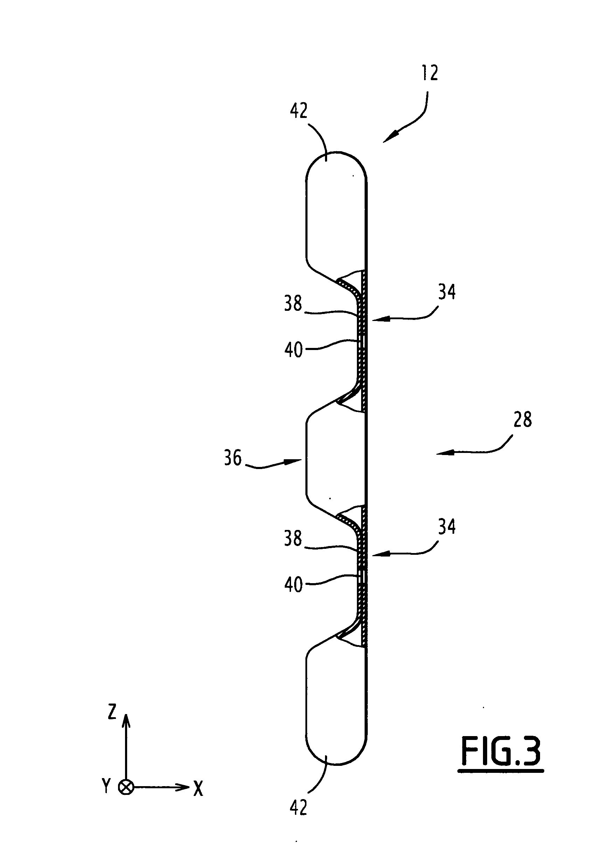

Les deux organes de fixation 26, 28 sont identiques et comportent chacun deux parties écrasées 34 reliées entre elles par une partie tubulaire 36 de section constante sensiblement circulaire correspondant à la section des traverses 22, 24 et d'épaisseur de paroi sensiblement constante (Figure 3).

Chaque partie écrasée 34 forme une double paroi 38 sensiblement plane dans laquelle est ménagé un orifice de passage 40 destiné à recevoir un élément de fixation à la caisse du véhicule, tel qu'un ensemble vis/écrou 41 s'étendant suivant X.

Les doubles parois 38 s'étendent sensiblement parallèlement à la direction transversale Y du véhicule, formant ainsi des parois de fixation longitudinale.

En variante, l'organe gauche 26 et/ou l'organe droit 28 sont des organes de fixation en Y sur la caisse du véhicule, les doubles parois 38 s'étendant sensiblement parallèlement à la direction longitudinale X du véhicule, formant ainsi des parois de fixation transversale, et les ensembles vis/écrou 41 s'étendant suivant Y.

Chaque organe de fixation 26, 28 est solidaire par ses extrémités des extrémités de chaque traverse 22, 24 de manière à relier les deux traverses 22, 24 entre elles en formant un cadre.

L'ensemble 12 définit ainsi quatre portions de liaison 42 entre chaque traverse 22, 24 et chaque organe de fixation 26, 28.

Les portions de liaison 42 sont venues de matière avec les traverses 22, 24 et les organes de fixation 26, 28, et sont plastiquement déformées de manière à former des portions de liaison 42 coudées avec un angle sensiblement égal à 90°.

En particulier, l'ensemble 12 est formé par un tube unique 44 comportant quatre cintrages, correspondant aux portions de liaison 42, et dont les extrémités, correspondant aux bords des tronçons 30 de la traverse supérieure 22, sont fixées entre elles par soudage de manière à former un cadre monotube.

Le dispositif 10 comprend une première pièce 14 de liaison à une traverse inférieure de baie et/ou à une colonne de direction du véhicule, et une deuxième pièce 16 de liaison à une jambe de force.

Les pièces 14 et 16 sont fixées sur les deux traverses 22, 24, sur leur partie gauche pour la première pièce 14 et sur leur partie centrale pour la deuxième pièce 16.

Le procédé de fabrication de l'ensemble 12 va maintenant être décrit.

A partir d'un tube unique 44 sensiblement rectiligne, de section constante sensiblement circulaire et d'épaisseur de paroi sensiblement constante, on réalise quatre cintrages successifs à la jonction entre les traverses 22, 24 et les organes de fixation 26, 28, de manière à former les quatre portions de liaison 42._{.}

Puis on fixe les extrémités du tube 44 entre elles par soudage de façon à obtenir un cadre monotube. La soudure 32 peut être placée à un endroit quelconque sur le cadre en fonction de la zone où se rejoignent les extrémités du tube 44, c'est-à-dire sur l'un parmi les deux traverses 22, 24 et les deux organes de fixation 26, 28.

On écrase alors les organes de fixation 26, 28 pour former les doubles parois planes 38 et on pratique un orifice de passage 40 dans chacune de ces doubles parois 38. Les parties écrasées 34 sont par exemple obtenues par emboutissage.

L'invention propose donc un ensemble de traverse de planche de bord pour véhicule automobile formé par un cadre monotube de fabrication simple et peu coûteuse.

De plus, du fait de l'intégration des différentes pièces, l'ensemble selon l'invention présente une faible masse et un temps d'assemblage réduit.

En variante, le tube 44 présente une section variable et/ou une épaisseur de paroi variable.

Toujours en variante, le tube 44 formant le cadre comporte au moins un cintrage supplémentaire pour s'adapter à la géométrie de l'environnement de l'ensemble 12, par exemple de façon à contourner un module de coussin gonflable de sécurité.

Dans une autre variante, l'organe de fixation gauche 26 et/ou l'organe de fixation droit 28 comportent une seule partie écrasée 34 ou plus de deux parties écrasées 34, et les doubles parois 38 respectives s'étendent sensiblement parallèlement à la direction transversale Y du véhicule et/ou sensiblement parallèlement à la direction longitudinale X du véhicule.

## Revendications

1. Ensemble (12) de traverse de planche de bord pour véhicule automobile, du type comprenant :
- deux traverses (22, 24) s'étendant sensiblement parallèlement l'une à l'autre ; et
- deux organes (26, 28) de fixation sur la caisse du véhicule, chaque organe de fixation (26, 28) étant fixé à une extrémité de chaque traverse (22, 24) de manière à relier les deux traverses (22, 24) entre elles,
**caractérisé en ce que** les deux organes de fixation (26, 28) sont venus de matière avec les deux traverses (22, 24).

2. Ensemble (12) selon la revendication 1, **caractérisé en ce que** chaque organe de fixation (26, 28) est relié à chaque traverse (22, 24) par une portion de liaison (42) qui est venue de matière avec l'organe de fixation (26, 28) et la traverse (22, 24) correspondants, la portion de liaison (42) étant plastiquement déformée de manière à former une portion de liaison (42) coudée.

3. Ensemble (12) selon la revendication 1 ou 2, **caractérisé en ce que** l'un parmi les deux traverses (22, 24) et les deux organes de fixation (26, 28) comporte deux tronçons (30) fixés l'un à l'autre par soudage.

4. Ensemble (12) selon l'une quelconque des revendications 1 à 3, **caractérisé en ce que** chaque organe de fixation (26, 28) comporte au moins une partie écrasée (34) et un orifice de passage (40) ménagé dans la partie écrasée (34), l'orifice de passage (40) étant destiné à recevoir un élément de fixation solidaire de la caisse du véhicule.

5. Ensemble (12) selon l'une quelconque des revendications 1 à 4, **caractérisé en ce que** les organes de fixation (26, 28) sont des organes de fixation longitudinale et/ou transversale sur la caisse du véhicule.

6. Ensemble (12) selon l'une quelconque des revendications 1 à 5, **caractérisé en ce qu'**il est formé par un tube unique (44) comportant au moins quatre cintrages (42).

7. Ensemble (12) selon la revendication 6, **caractérisé en ce que** le tube (44) comporte au moins un cintrage supplémentaire d'adaptation à la géométrie de l'environnement.

8. Ensemble (12) selon la revendication 6 ou 7, **caractérisé en ce que** le tube (44) présente une épaisseur de paroi variable.

9. Ensemble (12) selon l'une quelconque des revendications 6 à 8, **caractérisé en ce que** le tube (44) présente une section variable.

10. Dispositif (10) pour planche de bord de véhicule automobile, **caractérisé en ce qu'**il comprend un ensemble (12) de traverse de planche de bord selon l'une quelconque des revendications précédentes et au moins deux pièces (14, 16) de fixation sur la caisse du véhicule rapportées sur les traverses (22, 24).

11. Véhicule automobile, **caractérisé en ce qu'**il comprend un dispositif (10) pour planche de bord selon la revendication 10, l'ensemble (12) de traverse de planche de bord étant fixé par les pièces et organes de fixation (14, 16, 26, 28) sur la caisse du véhicule.

12. Procédé de fabrication d'un ensemble (12) de traverse de planche de bord selon l'une quelconque des revendications 1 à 9, **caractérisé en ce qu'**il comprend les étapes suivantes :
- cintrage d'un tube (44) à la jonction entre les traverses (22, 24) et les organes de fixation (26, 28) de façon à former des portions de liaison (42) ; et
- fixation des extrémités du tube (44) entre elles par soudage.

13. Procédé selon la revendication 12, **caractérisé en ce qu'**il comprend une étape d'écrasement du tube (44) de manière à former des parties écrasées (34), et une étape de réalisation d'un orifice de passage (40) dans les parties écrasées (34), l'orifice de passage (40) étant destiné à recevoir un élément de fixation solidaire de la caisse du véhicule.

## Claims

1. - Dashboard crossbar assembly (12) for a motor vehicle, comprising:
- two crossbars (22, 24) extending substantially in parallel to each other; and
- two fastening members (26, 28) on the vehicle body, each fastening member (26, 28) being fastened to one end of each crossbar (22, 24) so as to connect the two crossbars (22, 24) together,
**characterized in that** the two fastening members (26, 28) are integral with the two crossbars (22, 24),

2. - Assembly (12) according to claim 1, **characterized in that** each fastening member (26, 28) is connected to each crossbar (22, 24) by a connecting portion (42) integral with the corresponding fastening member (26, 28) and crossbar (22, 24), the connecting portion (42) being plastically deformed so as to form a bent connecting portion (42).

3. - Assembly (12) according to claim 1 or 2, **characterized in that** one of the two crossbars (22, 24) and the two fastening members (26, 28) includes two segments (30) fastened to each other by wielding.

4. - Assembly (12) according to any one of claims 1 to 3, **characterized in that** each fastening member (26, 28) includes at least one crushed portion (34) and a passage orifice (40) formed in the crushed portion (34), the passage orifice (40) being adapted to receive a fastening element seared to the vehicle body.

5. - Assembly (12) according to any once of claim 1 to 4, **characterized in that** the fastening members (26, 28) are longitudinal and/or transverse fastening members on the vehicle body.

6. - Assemble (12) according to any one of claims 1 to 5, **characterized in that** it is formed by a single tube (44) including at least four bendings (42).

7. - Assembly (12) according to claim 6, **characterized in that** the tube (44) includes at least one additional bending for adapting to the geometry of the environment.

8. - Assembly (12) according to claim 6 or 7, **characterized in that** the tube (44) has a variable wall thickness.

9. - Assembly (12) according to any one of claim 6 to 8, **characterized in that** the tube (44) has a variable section.

10. - Dashboard device (10) for a motor vehicule, **characterized in that** it cotr3prises a dashboard crossbar assembly (12) according to any one of the previous claim and at least two fastening parts (14, 16) on the vehicle body added on the crossbars (22, 24).

11. - Motor vehicle, **characterized in that** it comprises a dashboard device (10) according to claim 10, the dashboard crossbar assembly (12) being fastened by the fastening parts and members (14, 16, 26, 28) on the vehicle body.

12. - Method for manufacturing a dashboard crossbar assembly (12) according to any one of claims 1 to 9, **characterized in that** it comprises the following steps:
- bending of a tube (44) at the junction between the crossbar (22, 24) and the fastening members (26, 28) so as to form connecting portions (42); and
- fastening the ends of the tubes (44) to each other by welding.

13. - Method according to claim 12, **characterized in that** it comprises a step for crushing the tube (44) so as to form crushed portions (34), and a step for making a passage orifice (40) in the crushed portions (34), the passage orifice (40) being adapted to receive a fastening element secured to the vehicle body.

## Patentansprüche

1. Querträgeranordnung (12) für eine Instrumententafel eines Kraftfahrzeuges, des Typs, der umfasst:
- zwei Querträger (22, 24), die sich im Wesentlichen parallel zueinander erstrecken; und
- zwei Elemente (26, 28) zur Befestigung an der Karosserie des Fahrzeugs, wobei jedes Befestigungselement (26, 28) an einem Ende jedes Querträgers (22, 24) befestigt ist, derart, dass die beiden Querträger (22, 24) miteinander verbunden sind,
**dadurch gekennzeichnet, dass** die zwei Befestigungselemente (26, 28) aus einem Stück mit den zwei Traversen (22, 24) hergestellt sind.

2. Anordnung (12) nach Anspruch 1, **dadurch gekennzeichnet, dass** jedes Befestigungselement (26, 28) mit jedem Querträger (22, 24) durch ein Verbindungsteil (42) verbunden ist, das aus einem Stück mit Befestigungselementen (26, 28) und dem korrespondierenden Querträger (22, 24) hergestellt ist, wobei das Verbindungsteil (42) plastisch deformiert ist, derart, dass es einen gewinkelten Verbindungsbereich (42) bindet.

3. Anordnung (12) nach Anspruch 1 oder 2, **dadurch gekennzeichnet, dass** einer der Querträger (22, 24) und die zwei Befestigungselemente (26, 28) zwei Abschnitte (30) umfassen, die miteinander durch Schweißen verbunden sind.

4. Anordnung (12) nach einem beliebigen der Ansprüche 1 bis 3, **dadurch gekennzeichnet, dass** jedes Befestigungselement (26, 28) mindestens ein flach gedrücktes Teil (34) und eine Durchgangsöffnung (40) umfasst, die in dem flach gedrückten Teil (34) eingearbeitet ist, wobei die Durchgangsöffnung (40) dazu dient, ein mit der Karosserie des Fahrzeugs verbundenes Befestigungsorgan aufzunehmen.

5. Anordnung (12) nach einem beliebigen der Ansprüche 1 bis 4, **dadurch gekennzeichnet, dass** die Befestigungselemente (26, 28) an der Karosserie des Fahrzeugs längs gerichtete und/oder quer gerichtete Befestigungselemente sind.

6. Anordnung (12) nach einem beliebigen der Ansprüche 1 bis 5, **dadurch gekennzeichnet, dass** sie aus einem einzigen Rohr (44) gebildet ist, das mindestens vier Biegungen (42) umfasst.

7. Anordnung (12) nach Anspruch 6, **dadurch gekennzeichnet, dass** das Rohr (14) mindestens eine zusätzliche Biegung zur Anpassung an die Geometrie der Umgebung aufweist.

8. Anordnung (12) nach Anspruch 6 oder 7, **dadurch gekennzeichnet, dass** das Rohr (44) eine variable Wanddicke aufweist.

9. Anordnung (12) nach einem beliebigen der Ansprüche 6 bis 8, **dadurch gekennzeichnet, dass** das Rohr (44) einen variablen Querschnitt aufweist.

10. Vorrichtung (10) für eine Instrumententafel eines Kraftfahrzeugs, **dadurch gekennzeichnet, dass** sie eine Querträgeranordnung (12) für eine instrumententafel nach einem beliebigen der vorhergehenden Ansprüche und mindestens zwei Befestigungsteile (14, 16) an der Karosserie des Fahrzeugs aufweist, die an den Querträgern (22, 24) angesetzt sind.

11. Kraftfahrzeug, **dadurch gekennzeichnet, dass** es eine Vorrichtung (10) für eine Instrumententafel nach Anspruch 10 umfasst, wobei die Querträgeranordnung (12) der Instrumententafel durch die Befestigungsteile und elemente (14, 16, 26, 28) an der Karosserie des Fahrzeugs befestigt sind.

12. Verfahren zum Herstellen einer Querträgeranordnung (12) für eine Instrumententafel nach einem beliebigen der Ansprüche 1 bis 9, **dadurch gekennzeichnet, dass** es die folgenden Schritte umfasst.
- Biegen eines Rohres (44) an der Verbindung zwischen den Querträgern (22, 24) und den Befestigungselementen (26, 28) derart, dass Verbindungsbereiche (42) gebildet werden; und
- Befestigen der Enden des Rohrs (44) untereinander durch Schweißen.

13. Verfahren nach Anspruch 12, **dadurch gekennzeichnet, dass** es einen Schritt des Flachdrückens des Rohrs (44), derart, dass die flachgedrückten (34) gebildet werden und einen Schritt der Herstellung einer Durchgangsöffnung (40) in den flach gedrückten Teilen (34) umfasst, wobei die Durchgangsüffnung (40) dazu dient, ein mit der Karosserie des Fahrzeugs verbundenes Befestigungsorgan aufzunehmen.
